# NOUVEAU FASCICULE DE BREVET EUROPEEN

(11) **EP 3 207 278 B2**
(45) Date de publication et mention de la décision concernant l'opposition: **03.09.2025**
(45) Mention de la délivrance du brevet: 10.04.2019
(21) Numéro de dépôt: 15775731.1
(22) Date de dépôt: 09.10.2015
(51) Int. Cl.: F16F 15/14

(54) **DISPOSITIF D'AMORTISSEMENT D'OSCILLATIONS DE TORSION**
VORRICHTUNG ZUR DÄMPFUNG VON TORSIONSSCHWINGUNGEN
DEVICE FOR DAMPING TORSIONAL OSCILLATIONS

(30) Priorité: 14.10.2014 FR 1459836
(43) Date de publication de la demande: 23.08.2017
(73) Titulaire: Valeo Embrayages, 80009 Amiens Cedex 2 (FR)
(72) Inventeur: VERHOOG, Roel, F-60190 Gournay Sur Aronde (FR)
(74) Mandataire: Valeo Powertrain Systems
(86) Numéro de dépôt international: PCT/EP2015/073449
(87) Numéro de publication internationale: WO 2016/058950

(56) Documents cités:
- WO-A1-2013/156733
- DE-A1- 102010 049 556
- FR-A1- 2 986 592

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

La venue en butée des corps pendulaires contre le support à l'issue de leur déplacement depuis une position de repos crée des chocs qui sont notamment problématiques pour de faibles vitesses de rotation du moteur thermique, par exemple pour des vitesses de rotation inférieures à 1200 tr/min mesurées au vilebrequin.

Pour remédier à ces chocs, il est par exemple connu de munir tout ou partie des rivets de chaque corps pendulaire d'un revêtement amortissant, le contour extérieur de ce revêtement venant au contact du support tandis que le contour intérieur de ce revêtement est au contact du rivet, et donc du corps pendulaire concerné, pour amortir ledits chocs.

Il est encore connu, par exemple de la demande DE 10 2009 042 812-, de munir d'un organe d'amortissement de butée une poutre de liaison reliant deux masses pendulaires d'un corps pendulaire. L'organe d'amortissement de butée présente une forme complexe rendant difficile et onéreuse sa réalisation. Les documents FR2986592A1 et DE102010049556A1 donnent d'autres exemples de butées pour des masses pendulaires de corps pendulaires et représentent l'état de la technique. DE 806 073 divulgue un dispositif d'amortissement d'oscillations de torsion selon le préambule de la revendication 1.

Il existe un besoin pour remédier aux inconvénients associés aux chocs existant entre les corps pendulaires et le support d'une manière relativement simple, efficace et peu coûteuse.

L'invention vise à répondre à ce besoin et elle y parvient, selon l'un de ses aspects, à l'aide d'un dispositif d'amortissement d'oscillations de torsion selon la revendication 1.

Comme on le verra par la suite, lesdites positions relatives peuvent comprendre la position de repos du dispositif, la position de butée contre le support du corps pendulaire à l'issue d'un déplacement dans le sens trigonométrique de ce corps pendulaire depuis la position de repos, et la position de butée contre le support du corps pendulaire à l'issue d'un déplacement dans le sens non-trigonométrique de ce corps pendulaire depuis la position de repos.

Selon l'invention, le contact entre l'organe d'amortissement de butée et le corps pendulaire s'effectue au niveau du contour extérieur de l'organe d'amortissement de butée, tout comme le contact entre l'organe d'amortissement de butée et le support.

L'organe d'amortissement de butée présente une forme plus régulière que celle selon DE 10 2009 042 812, rendant sa réalisation plus simple et moins onéreuse.

L'organe d'amortissement de butée peut présenter des propriétés élastiques permettant l'amortissement des chocs liés au contact entre le support et le corps pendulaire. Cet amortissement est alors permis par une compression de l'organe d'amortissement de butée. L'organe d'amortissement de butée est par exemple en élastomère ou en caoutchouc.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale », et
- « solidaire » signifie « rigidement couplé ».

L'organe d'amortissement de butée peut être solidaire du corps pendulaire et venir en permanence en regard d'une surface du corps pendulaire ayant dans ledit plan une forme complémentaire de celle du contour extérieur de ladite section de l'organe d'amortissement de butée. Comme on le verra par la suite, le corps pendulaire peut comprendre une première masse pendulaire disposée axialement d'un premier côté du support et une deuxième masse pendulaire disposée axialement d'un deuxième côté du support, lesdites masses pendulaires étant solidarisées entre elles par au moins un organe de liaison. L'organe d'amortissement de butée peut alors venir en permanence en regard d'une surface de l'organe de liaison sans être directement fixé sur cet organe de liaison. L'organe d'amortissement de butée s'étend par exemple entre deux extrémités axiales et chacune de ces extrémités axiales est fixée sur une des masses pendulaires, de manière à solidariser l'organe d'amortissement de butée au corps pendulaire.

L'organe de roulement peut avoir dans ledit plan un contour extérieur circulaire et le diamètre de ce contour circulaire peut être supérieur à la dimension orthoradiale de la section dans ledit plan de l'organe d'amortissement de butée, notamment au diamètre de la section dans ledit plan de l'organe d'amortissement de butée. Autrement dit, dans ledit plan, la dimension orthoradiale de l'organe de roulement peut être supérieure à la dimension orthoradiale de l'organe d'amortissement de butée.

Le dispositif d'amortissement d'oscillations de torsion présente une position de repos dans laquelle il ne filtre pas les oscillations de torsion et dans laquelle le corps pendulaire est immobile par rapport au support.

Selon un exemple de mise en oeuvre de l'invention, le contour extérieur de la section de l'organe d'amortissement de butée ayant au moins deux axes de symétrie dans ledit plan peut être circulaire.

Selon cet exemple de mise en oeuvre de l'invention, le centre du cercle définissant dans ledit plan le contour extérieur de l'organe de roulement et le centre du cercle définissant dans ledit plan le contour extérieur de l'organe d'amortissement de butée peuvent être radialement alignés lorsque le dispositif est dans la position de repos.

Toujours selon cet exemple de mise en oeuvre de l'invention, le rayon du cercle définissant dans ledit plan le contour extérieur de l'organe de roulement peut être supérieur au rayon du cercle définissant dans ledit plan le contour extérieur de l'organe d'amortissement de butée, de sorte que lorsque le dispositif d'amortissement d'oscillations de torsion est au repos, l'organe d'amortissement de butée est angulairement contenu dans l'espace angulaire défini par l'organe de roulement. Le rayon du cercle définissant le contour extérieur de l'organe de roulement peut être sensiblement égal au double du rayon du cercle définissant le contour extérieur de l'organe d'amortissement de butée. Ces rayons peuvent respectivement être compris entre 4 mm et 6 mm et entre 2 mm et 4 mm.

Dans tout ce qui précède, le support comprend une fenêtre ayant un contour avec lequel vient en contact le contour extérieur de ladite section de l'organe d'amortissement de butée pour les positions relatives du corps pendulaire par rapport au support. La fenêtre peut présenter un contour fermé.

Une partie du contour de ladite section de l'organe d'amortissement de butée peut venir en contact avec le corps pendulaire et une autre partie du contour de ladite section de l'organe d'amortissement de butée peut venir en contact avec le contour de la fenêtre ménagée dans le support dans la position de repos du dispositif d'amortissement d'oscillations de torsion. Dans ce cas, l'autre partie du contour de ladite section de l'organe d'amortissement de butée vient par exemple en contact avec une zone sensiblement rectiligne du contour de la fenêtre ménagée dans le support.

Le dispositif présente une position de butée du corps pendulaire contre le support, à l'issue d'un déplacement dans le sens trigonométrique du corps pendulaire par rapport au support depuis la position de repos, position de butée dans laquelle une partie du contour extérieur de ladite section de l'organe d'amortissement de butée peut venir en contact avec le corps pendulaire et dans laquelle une autre partie du contour extérieur de ladite section de l'organe d'amortissement de butée peut venir en contact avec le contour de la fenêtre ménagée dans le support.

Le dispositif présente une position de butée du corps pendulaire contre le support, à l'issue d'un déplacement dans le sens non trigonométrique du corps pendulaire par rapport au support depuis la position de repos, position de butée dans laquelle une partie du contour extérieur de ladite section de l'organe d'amortissement de butée peut venir en contact avec le corps pendulaire et dans laquelle une autre partie du contour extérieur de ladite section de l'organe d'amortissement de butée peut venir en contact avec le contour de la fenêtre ménagée dans le support.

Dans l'une ou l'autre de ces positions de butée du corps pendulaire contre le support, l'autre partie du contour extérieur de ladite section de l'organe d'amortissement de butée peut venir en contact avec une zone du contour de la fenêtre présentant dans ledit plan une forme complémentaire de celle du contour de ladite section de l'organe d'amortissement de butée.

Autrement dit, selon l'invention, un même organe d'amortissement de butée peut s'interposer avec contact entre le corps pendulaire et le support dans chaque position de butée à l'issue d'un déplacement depuis la position de repos. Cet organe d'amortissement de butée peut également s'interposer avec ou sans contact entre le corps pendulaire et le support dans la position de repos. Un même volume de matière de l'organe d'amortissement de butée peut être comprimé pour amortir ces chocs, que le dispositif soit dans la position de repos ou dans l'une des positions de butée à l'issue d'un déplacement depuis la position de repos.

Une telle action de l'organe d'amortissement de butée est par exemple due au positionnement de ce dernier radialement aligné avec l'organe de roulement lorsque le dispositif est au repos. Le contour de la fenêtre peut par ailleurs avoir une forme choisie pour permettre l'emploi d'un unique organe d'amortissement de butée pour amortir ces différents chocs.

Comme déjà mentionné, le corps pendulaire peut comprendre une première masse pendulaire disposée axialement d'un premier côté du support et une deuxième masse pendulaire disposée axialement d'un deuxième côté du support, lesdites masses pendulaires étant solidarisées entre elles par au moins un organe de liaison.

L'organe de liaison peut s'étendre angulairement entre deux extrémités et l'organe d'amortissement de butée peut être disposé angulairement à distance de chaque extrémité de l'organe de liaison. L'organe de liaison présente par exemple une dimension angulaire mesurée depuis l'axe de rotation du support entre ses deux extrémités lorsque le dispositif est dans la position de repos, et l'organe d'amortissement de butée peut être disposé exclusivement en regard d'une zone centrale de l'organe de liaison, cette zone centrale de l'organe de liaison s'étendant de part et d'autre d'un axe médian pour l'organe de liaison et cette zone centrale représentant 10%, notamment 20%, notamment 30%, de la dimension angulaire de l'organe de liaison. Dans la position de repos du dispositif, l'axe médian est orienté radialement et il fait un angle égal à la moitié de la dimension angulaire de l'organe de liaison avec chaque axe radialement orienté passant par une extrémité angulaire de l'organe de liaison.

L'organe de liaison peut coopérer avec un unique organe d'amortissement de butée.

L'organe d'amortissement de butée est par exemple positionné sensiblement à égale distance de chaque extrémité angulaire de l'organe de liaison.

Selon un mode de réalisation de l'invention, l'organe de liaison définit une piste de roulement coopérant avec l'organe de roulement pour guider le déplacement du corps pendulaire. Une portion du contour de cet organe de liaison définit par exemple cette piste de roulement. En variante, un revêtement déposé sur une portion du contour de cet organe de liaison définit cette piste de roulement.

Selon ce mode de réalisation, l'organe de liaison est reçu dans la fenêtre et l'organe d'amortissement de butée vient en permanence en regard d'une surface radialement intérieure de l'organe de liaison, ladite surface ayant dans ledit plan une forme complémentaire de celle du contour extérieur de ladite section de l'organe d'amortissement de butée.

Selon ce mode de réalisation, une partie du contour de la fenêtre définit une piste de roulement coopérant avec l'organe de roulement pour guider le déplacement du corps pendulaire.

Selon ce mode de réalisation, chaque fenêtre peut recevoir un organe de liaison, un organe d'amortissement de butée et un organe de roulement. Chaque fenêtre reçoit par exemple un unique organe de liaison, un unique organe d'amortissement de butée et un unique organe de roulement.

Selon un autre mode de réalisation, des cavités traversantes sont ménagées dans le support, ces cavités étant distinctes de la fenêtre et chacune de ces cavités recevant un organe de roulement. Les pistes de roulement sont alors définies d'une part par le contour de ces cavités et d'autre part par le contour de cavités ménagées dans les masses pendulaires et qui reçoivent également les organes de roulement. Selon cet autre mode de réalisation, la partie du corps pendulaire en regard de laquelle est disposé l'organe d'amortissement de butée peut être une pièce de guidage traversée par un ou plusieurs rivets reliant les masses pendulaires du corps pendulaire, cette pièce présentant un contour dont la forme est apte à coopérer avec les bords de la fenêtre du support, cette dernière présentant le cas échéant un contour radialement ouvert vers l'extérieur.

Dans tout ce qui précède, le corps pendulaire peut comprendre :
- deux organes de liaison décalés angulairement et solidarisant entre elles les deux masses pendulaires, et
- deux organes d'amortissement de butée, chaque organe d'amortissement de butée étant associé à un organe de liaison.

Deux fenêtres du support consécutives angulairement parlant peuvent alors être associées à un même corps pendulaire, chaque fenêtre recevant l'un des organes de liaison, l'organe d'amortissement de butée associé, et un organe de roulement.

Lorsque le corps pendulaire vient en butée contre le support à l'issue d'un déplacement depuis la position de repos, les deux organes d'amortissement de butée peuvent ne pas être sollicités de façon exactement simultanée, l'un des organes d'amortissement de butée étant alors sollicité avant que l'autre organe d'amortissement de butée ne le soit. En variante, les deux organes d'amortissement de butée sont sollicités de façon exactement simultanée.

Dans tout ce qui précède, le dispositif peut comprendre :
- au moins un premier corps pendulaire permettant de filtrer une première valeur d'ordre des oscillations de torsion, et
- au moins un deuxième corps pendulaire permettant de filtrer une deuxième valeur d'ordre des oscillations de torsion, différente de la première valeur d'ordre,

Au sens de la présente demande, une valeur d'ordre des oscillations de torsion est filtrée lorsque l'amplitude à cette valeur d'ordre des oscillations de torsion est réduite par le dispositif d'une valeur égale à au moins 10% de l'amplitude avant filtrage.

Le dispositif étant configuré pour filtrer des ordres, la fréquence des oscillations de torsion filtrée par les premiers, respectivement deuxièmes, corps pendulaires varie en fonction de la vitesse de rotation du support. L'emploi du terme « ordre » implique que l'on traite des fréquences variables.

Dans tout ce qui précède, chaque organe de roulement est par exemple un rouleau de section circulaire dans ledit plan orthogonal à l'axe de rotation du support. Les extrémités axiales du rouleau peuvent être dépourvues de rebord annulaire fin. Le rouleau est par exemple réalisé en acier.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Dans tout ce qui précède, chaque rouleau peut être uniquement sollicité en compression entre les pistes de roulement mentionnées ci-dessus. Les pistes de roulement solidaires du support et les pistes de roulement solidaires du corps pendulaire et coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Le dispositif peut comprendre au moins une pièce d'interposition dont au moins une partie est axialement disposée entre le support et une masse pendulaire du corps pendulaire. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, le support peut ou non être réalisé d'une seule pièce.

Le dispositif comprend par exemple plusieurs corps pendulaires, par exemple un nombre compris entre deux et huit, notamment trois ou six corps pendulaires.

L'invention a encore pour objet, selon un autre de ses aspects, un composant pour système de transmission d'un véhicule automobile, le composant étant notamment un double volant amortisseur, un convertisseur de couple hydrodynamique ou un disque de friction, comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'exemples non limitatifs de mise en oeuvre de celle-ci et à l'examen du dessin annexé sur lequel :
- la figure 1 représente de façon schématique un dispositif d'amortissement d'oscillations de torsion selon un premier exemple de mise en oeuvre de l'invention, lorsqu'il est au repos,
- la figure 2 représente le dispositif de la figure 1 avec une partie de ce dernier en éclaté,
- la figure 3 est une vue partielle et de face du dispositif de la figure 1,
- la figure 4 est une vue similaire à celle de la figure 3, lorsque le corps pendulaire est en butée contre le support à l'issue d'un déplacement depuis la position de repos,
- la figure 5 représente en détail une partie du corps pendulaire et l'organe d'amortissement de butée du dispositif de la figure 1,
- la figure 6 est une vue en perspective de l'organe d'amortissement de butée de la figure 1, et
- la figure 7 est une vue partielle et de face d'un dispositif d'amortissement d'oscillations de torsion selon un deuxième exemple de mise en oeuvre de l'invention.

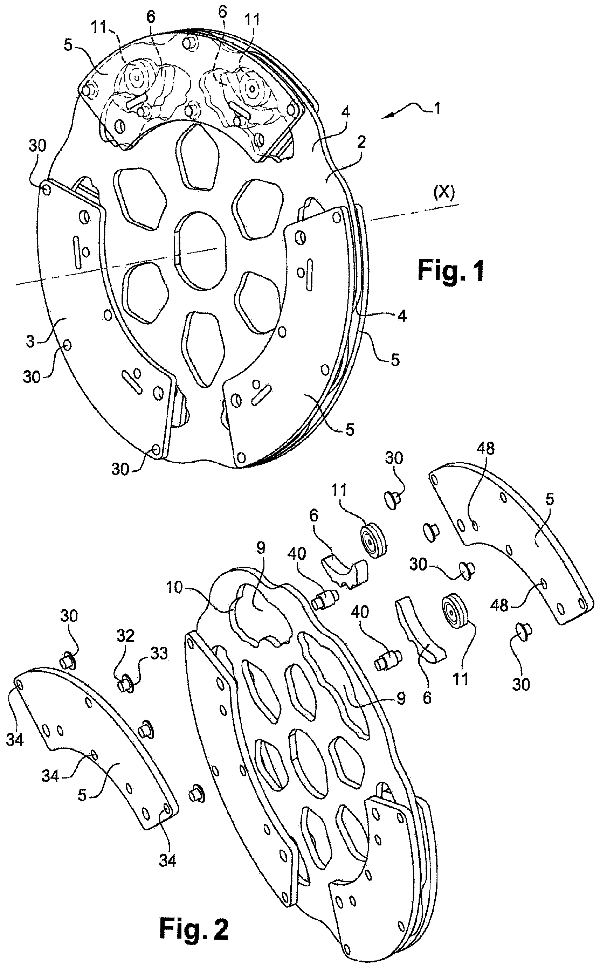

On a représenté sur la figure 1 un dispositif d'amortissement 1 selon un exemple de mise en oeuvre de l'invention. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque de friction.

Ce composant peut faire partie d'une chaîne de propulsion d'un véhicule automobile, cette dernière comprenant un moteur thermique notamment à trois ou quatre cylindres.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, trois corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage.

Dans l'exemple considéré, le support 2 présente globalement une forme d'anneau comportant deux côtés opposés 4 qui sont ici des faces planes.

Comme on peut notamment le voir sur la figure 2, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Les organes de liaison 6, encore appelés « entretoises », sont dans l'exemple considéré décalés angulairement.

Chaque organe de liaison 6 s'étend en partie dans une fenêtre 9 ménagée dans le support. Dans l'exemple considéré, la fenêtre 9 définit un espace vide à l'intérieur du support, cette fenêtre étant délimitée par un contour fermé 10.

Le dispositif 1 comprend encore dans l'exemple considéré des organes de roulement 11 guidant le déplacement des corps pendulaires 3 par rapport au support 2. Les organes de roulement 11 sont ici des rouleaux dont au moins une portion présente une section transversale circulaire de rayon R.

Dans l'exemple décrit, le mouvement par rapport au support 2 de chaque corps pendulaire 3 est guidé par deux organes de roulement 11, chacun d'entre eux coopérant avec l'un des organes de liaison 6 du corps pendulaire 3.

Chaque organe de roulement 11 coopère d'une part avec une piste de roulement 12 définie par le support 2, et qui est ici formée par une partie du contour 10 de la fenêtre 9, et d'autre part avec une piste de roulement 13 définie par le corps pendulaire 3, et qui est ici formée par une partie du contour extérieur de l'organe de liaison 6.

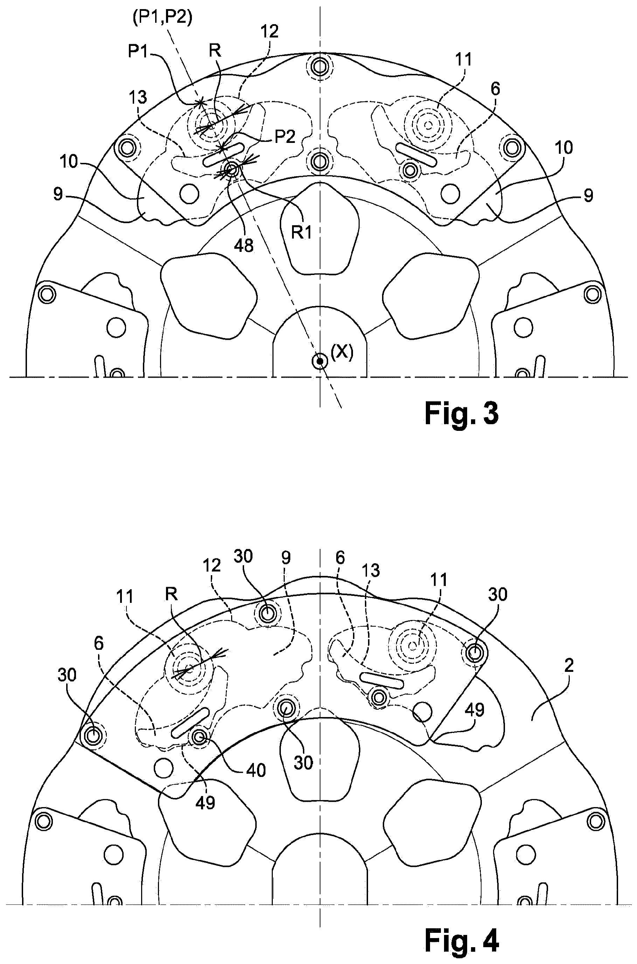

Plus précisément, chaque organe de roulement 11 interagit au niveau radialement intérieur avec la piste de roulement 13 et au niveau radialement extérieur avec la piste de roulement 12 lors de son déplacement par rapport au support 2 et au corps pendulaire 3, étant par exemple uniquement sollicité en compression entre les pistes de roulement 12 et 13. Comme représenté par exemple sur la figure 3, les pistes de roulement 12 et 13 présentent dans l'exemple décrit des portions radialement en regard l'une de l'autre.

Dans l'exemple considéré, le dispositif 1 comprend encore des pièces d'interposition 30 disposées axialement entre chaque masse pendulaire 5 et le support 2. Chaque pièce d'interposition 30 est ici distincte de la masse pendulaire 5 et du support 2, étant rapportée sur la masse pendulaire 5.

Pour une masse pendulaire 5 donnée, quatre pièces d'interposition 30 sensiblement identiques peuvent être prévues. Parmi ces quatre pièces d'interposition 30 :
- une pièce d'interposition 30 est disposée à chaque extrémité circonférentielle et radialement extérieure de la masse pendulaire 5,
- une pièce d'interposition 30 est disposée sur le bord radialement extérieur de la masse pendulaire 5, à mi-chemin entre les deux extrémités circonférentielles et radialement extérieures de cette masse 5, et
- une pièce d'interposition 5 est disposée sur le bord radialement intérieur de la masse pendulaire 5, à mi-chemin entre les deux extrémités circonférentielles et radialement intérieures de cette masse pendulaire 5.

Dans une variante, les pièces d'interposition associées à une même masse peuvent présenter des formes différentes, d'une pièce d'interposition à l'autre.

Dans une autre variante, un autre nombre de pièces d'interposition est possible.

Chaque pièce d'interposition 30 comprend dans l'exemple considéré :
- un ou plusieurs tétons 32 destinés à être montés dans un trou 34 ménagé dans la masse pendulaire 5 pour assurer la fixation sur cette masse de la pièce d'interposition 30, et
- une partie d'interposition 33 disposée entre la masse pendulaire 5 et le support 2 lorsque le dispositif d'amortissement 1 est assemblé.

La portion d'interposition 33 a par exemple une forme circulaire dans un plan orthogonal à l'axe X.

Chaque pièce d'interposition 30 se présente par exemple sous la forme d'un patin, étant notamment réalisée en plastique, mais l'invention n'est pas limitée à ce choix de matériau.

Comme représenté sur les figures, chaque organe de liaison 6 est associé à un unique organe d'amortissement de butée 40 pour le déplacement du corps pendulaire 3 par rapport au support 2. Chaque organe d'amortissement de butée 40 présente dans l'exemple décrit une portion cylindrique 44 de section transversale circulaire et qui est interposée radialement entre l'organe de liaison 6 et le support 2, et présente un contour extérieur 41. Cette portion 44 présente ici un rayon R1 qui est inférieur au rayon R de l'organe de roulement 11.

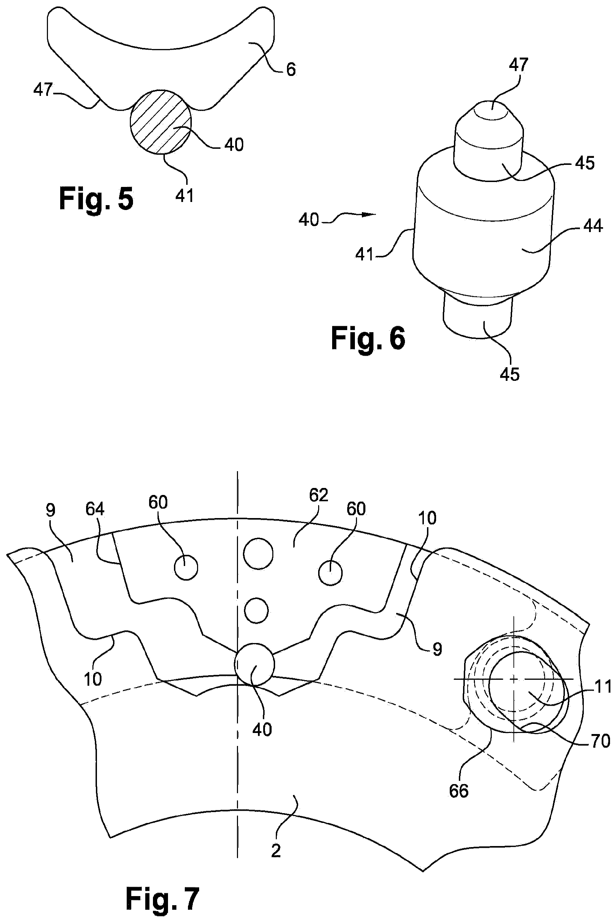

Comme représenté notamment sur la figure 6, chaque organe d'amortissement de butée 40 présente encore deux portions d'extrémité 45 qui encadrent axialement la portion 44. Les portions d'extrémité 45 peuvent être également cylindriques de section transversale circulaire, ayant alors un rayon inférieur au rayon R1. Dans un exemple particulier, R1 est égal à 3 mm et R est égal à 5 mm. Chaque portion d'extrémité 45 peut présenter un bout libre effilé formant un picot 47 monté sans jeu ou avec un léger jeu dans un logement 48 ménagé dans une des masses pendulaires 5, de manière à solidariser l'organe d'amortissement de butée 40 avec ladite masse pendulaire 5.

Comme le montre la figure 3, le dispositif d'amortissement d'oscillations de torsion est par exemple tel que lorsque ce dispositif est au repos, l'organe de roulement 11 vient en contact avec la piste de roulement 12 par un point P1 et avec la piste de roulement 13 par un point P2.

On constate sur la figure 3 que la droite (P1P2) coupe l'organe d'amortissement de butée 40 dans cette position de repos du dispositif 1. Le centre du cercle définissant le contour extérieur 41 de la portion 44 de l'organe d'amortissement de butée et le centre du cercle définissant le contour extérieur de l'organe de roulement 11 appartiennent également dans l'exemple décrit à une même droite qui coupe également l'axe de rotation (X) du support.

Comme représenté sur la figure 5, chaque organe de liaison 6 peut s'étendre angulairement entre deux extrémités angulaires et l'organe d'amortissement de butée 40 associé audit organe de liaison peut être solidarisé aux masses pendulaires 5 de manière à être disposé sensiblement à mi-chemin entre ces extrémités angulaires de l'organe de liaison 6. L'organe d'amortissement de butée 40 vient alors en regard d'un bord radialement intérieur 47 de l'organe de liaison 6 et ce bord 47 présente en regard de l'organe d'amortissement de butée 40 une portion dont la forme est complémentaire de la forme du contour extérieur 41 de la portion 44 de l'organe d'amortissement de butée 40.

Chaque organe d'amortissement de butée 40 présente dans l'exemple considéré des propriétés élastiques permettant l'amortissement des chocs liés au contact entre le corps pendulaire 3 et le support 2. L'organe d'amortissement de butée 40 est par exemple en élastomère ou en caoutchouc.

Comme on va le voir à présent, l'organe d'amortissement de butée 40 permet d'amortir les chocs liés à la venue en butée contre le support 2 du corps pendulaire 3 à l'issue d'un déplacement depuis la position de repos, quel que soit le sens de ce déplacement. L'organe d'amortissement de butée peut par ailleurs permettre d'amortir les chocs liés à la chute radiale du corps pendulaire 3 pour de faibles vitesses de rotation du moteur thermique du véhicule, par exemple lors du démarrage ou de l'arrêt du véhicule.

Sur la figure 3, dans laquelle le dispositif 1 est au repos, on constate que chaque organe de liaison 6 d'un même corps pendulaire 3 repose par l'intermédiaire de l'organe d'amortissement de butée 40 contre le support 2. L'organe d'amortissement de butée 40 vient ici contre une zone sensiblement rectiligne 48 du contour 10 de la fenêtre 9. En variante, un espace vide existe dans cette position de repos entre l'organe d'amortissement de butée 40 et cette zone 48 du contour de la fenêtre.

La figure 4 représente le dispositif 1 lorsque le corps pendulaire est dans une position de butée contre le support 2, à l'issue d'un déplacement dans le sens trigonométrique du corps pendulaire 3 par rapport au support 2 depuis la position de repos de la figure 3. Dans cette position de butée, une partie du contour extérieur 41 de l'organe d'amortissement de butée 40 vient en contact avec le corps pendulaire 3 et une autre partie de ce contour extérieur 41 vient en contact avec une zone 49 sensiblement circulaire du contour 10 de la fenêtre 9, de manière à amortir les chocs liés à cette venue en butée.

De façon similaire, chaque organe d'amortissement de butée 40 permet également d'amortir les chocs liés à la venue en butée du corps pendulaire 3 contre le support 2 à l'issue d'un déplacement dans le sens non-trigonométrique du corps pendulaire 3 par rapport au support 2 depuis la position de repos.

On va maintenant décrire en référence à la figure 7 un dispositif 1 selon un deuxième exemple de mise en oeuvre de l'invention.

Ce deuxième exemple diffère de celui décrit en référence aux figures 1 à 6 par le fait que le corps pendulaire 3 et le support 2 présentent une structure différente.

La fenêtre 9 est ici ouverte radialement vers l'extérieur, le contour 10 ne définissant alors pas une ligne fermée.

Les deux masses pendulaires 5 sont dans l'exemple de la figure 7 reliées via une pluralité de rivets 60 qui sont reçus dans une pièce de guidage 62. Cette pièce de guidage 62 présente comme on peut le voir sur la figure 7 des bords angulaires 64 dont la forme peut coopérer avec celle du contour 10 de l'ouverture 9 pour former une butée pour le déplacement du corps pendulaire 3 par rapport au support 2.

Dans cet exemple, des cavités 66 distinctes de la fenêtre 9 sont ménagées dans le support 2 et sont sensiblement axialement en regard d'autres cavités 70 ménagées dans les masses pendulaires 5. Chaque organe de roulement 11 est à la fois reçu dans une cavité 66 et dans une cavité 70, de manière à guider le déplacement du corps pendulaire 3 par rapport au support 2.

Similairement à ce qui a été mentionné en référence au premier exemple de mise en oeuvre de l'invention, un organe d'amortissement de butée 40 est prévu pour s'interposer entre la pièce de guidage 62 et le support 2, tout en étant simultanément en contact avec ces derniers, dans la position de repos du dispositif 1 et dans les positions de butée contre le support du corps pendulaire 3 à l'issue d'un déplacement depuis la position de repos, qu'il s'agisse d'un déplacement dans le sens trigonométrique ou d'un déplacement dans le sens non-trigonométrique.

L'invention n'est pas limitée aux exemples qui viennent d'être décrits.

## Revendications

1. Dispositif (1) d'amortissement d'oscillations de torsion, comprenant :
- un support (2) apte à se déplacer en rotation autour d'un axe (X),
- au moins un corps pendulaire (3) mobile par rapport au support (2),
- au moins un organe de roulement (11) guidant le déplacement du corps pendulaire (3) par rapport au support (2), et
- au moins un organe d'amortissement de butée (40), présentant dans au moins un plan orthogonal à l'axe de rotation (X) du support (2) une section ayant au moins deux axes de symétrie, cette section ayant un contour extérieur (41) venant simultanément en contact avec le corps pendulaire (3) et avec le support (2) pour des positions relatives du corps pendulaire (3) par rapport au support (2), ces positions relatives comprenant la position de butée du corps pendulaire (3) contre le support (2) à l'issue d'un déplacement dans le sens trigonométrique du corps pendulaire par rapport au support depuis la position de repos et la position de butée du corps pendulaire (3) contre le support (2) à l'issue d'un déplacement dans le sens non-trigonométrique du corps pendulaire par rapport au support depuis la position de repos,
l'organe d'amortissement de butée (40) présentant des propriétés élastiques permettant l'amortissement des chocs liés au contact entre le support (2) et le corps pendulaire (3),
**caractérisé en ce que** le support (2) comprend une fenêtre (9) ayant un contour (10) avec lequel vient en contact le contour extérieur (41) de ladite section de l'organe d'amortissement de butée (40) pour les positions relatives du corps pendulaire (3) par rapport au support (2).

2. Dispositif selon la revendication 1, l'organe d'amortissement de butée (40) étant solidaire du corps pendulaire (3) et venant en permanence en regard d'une surface (47) du corps pendulaire (3) ayant dans ledit plan une forme complémentaire de celle du contour extérieur (41) de ladite section de l'organe d'amortissement de butée (40).

3. Dispositif selon l'une des revendications précédentes, l'organe de roulement (11) ayant dans ledit plan un contour extérieur (41) circulaire dont le diamètre (2*R) est supérieur à la dimension orthoradiale (2*R1) de la section dans ledit plan de l'organe d'amortissement de butée (40), notamment au diamètre de la section dans ledit plan de l'organe d'amortissement de butée.

4. Dispositif selon l'une quelconque des revendications précédentes, le contour extérieur (41) de la section de l'organe d'amortissement de butée (40) ayant au moins deux axes de symétrie dans ledit plan étant circulaire.
, le centre du cercle définissant dans ledit plan le contour extérieur de l'organe de roulement (11) et le centre du cercle définissant dans ledit plan le contour extérieur (41) de l'organe d'amortissement de butée (40) étant de préférence radialement alignés lorsque le dispositif (1) est dans la position de repos.

5. Dispositif selon l'une quelconque des revendications précédentes, une partie du contour (41) de ladite section de l'organe d'amortissement de butée (40) venant en contact avec le corps pendulaire (3) et une autre partie du contour (41) de ladite section de l'organe d'amortissement de butée (40) venant en contact avec le contour (10) de la fenêtre (9) ménagée dans le support (2) dans la position au repos du dispositif (1).

6. Dispositif selon la revendication 5, l'autre partie du contour (41) de ladite section de l'organe d'amortissement de butée (40) venant en contact avec une zone sensiblement rectiligne (48) du contour (10) de la fenêtre (9) ménagée dans le support (2).

7. Dispositif selon l'une quelconque des revendications précédentes, une partie du contour extérieur (41) de ladite section de l'organe d'amortissement de butée (40) venant en contact avec le corps pendulaire (3) et une autre partie du contour extérieur (41) de ladite section de l'organe d'amortissement de butée (40) venant en contact avec le contour (10) de la fenêtre (9) ménagée dans le support (2) dans la position de butée du corps pendulaire (3) contre le support (2) à l'issue d'un déplacement dans le sens trigonométrique du corps pendulaire (3) par rapport au support (2) depuis la position de repos.

8. Dispositif selon l'une quelconque des revendications précédentes, une partie du contour extérieur (41) de ladite section de l'organe d'amortissement de butée (40) venant en contact avec le corps pendulaire (3) et une autre partie du contour extérieur (41) de ladite section de l'organe d'amortissement de butée (40) venant en contact avec le contour (10) de la fenêtre (9) ménagée dans le support (2) dans la position de butée du corps pendulaire (3) contre le support (2) à l'issue d'un déplacement dans le sens non-trigonométrique du corps pendulaire (3) par rapport au support (2) depuis la position de repos.

9. Dispositif selon la revendication 7 ou 8, l'autre partie du contour extérieur (41) de ladite section de l'organe d'amortissement de butée (40) venant en contact avec une zone (49) du contour (10) de la fenêtre (9) présentant dans ledit plan une forme complémentaire de celle du contour (41) de ladite section de l'organe d'amortissement de butée (40).

10. Dispositif selon l'une quelconque des revendications précédentes, le corps pendulaire (3) comprenant une première masse pendulaire (5) disposée axialement d'un premier côté (4) du support (2) et une deuxième masse pendulaire (5) disposée axialement d'un deuxième côté (4) du support, lesdites masses pendulaires (5) étant solidarisées entre elles par au moins un organe de liaison (6).
l'organe de liaison (6) définissant notamment une piste de roulement (13) coopérant avec l'organe de roulement (11) pour guider le déplacement du corps pendulaire (3) par rapport au support (2).

11. Dispositif selon la revendication 10, l'organe d'amortissement de butée (40) venant en permanence en regard d'une surface radialement intérieure (47) de l'organe de liaison (6), ladite surface ayant dans ledit plan une forme complémentaire de celle du contour extérieur (41) de ladite section de l'organe d'amortissement de butée (40).

12. Dispositif selon la revendication 11, le corps pendulaire (3) comprenant :
- deux organes de liaison (6) décalés angulairement et solidarisant entre elles les deux masses pendulaires (5), chaque organe de liaison (6) coopérant avec un seul organe de roulement (11), et
- deux organes d'amortissement de butée (40), chaque organe d'amortissement de butée (40) étant associé à un organe de liaison (6).

13. Dispositif selon l'une quelconque des revendications 10 à 12, l'organe de liaison (6) s'étendant angulairement entre deux extrémités et l'organe d'amortissement de butée (40) étant disposé sensiblement à égale distance de chaque extrémité angulaire de l'organe de liaison (6).

## Patentansprüche

1. Vorrichtung (1) zur Dämpfung von Torsionsschwingungen, umfassend:
- einen Träger (2), der dafür ausgelegt ist, sich um eine Achse (X) drehend zu bewegen,
- wenigstens einen Pendelkörper (3), der bezüglich des Trägers (2) beweglich ist,
- wenigstens ein Wälzelement (11), das die Bewegung des Pendelkörpers (3) bezüglich des Trägers (2) führt, und
- wenigstens ein Anschlagdämpfungselement (40), das in wenigstens einer zur Drehachse (X) des Trägers (2) orthogonalen Ebene einen Querschnitt mit wenigstens zwei Symmetrieachsen aufweist, wobei dieser Querschnitt eine Außenkontur (41) aufweist, die für relative Positionen des Pendelkörpers (3) bezüglich des Trägers (2) gleichzeitig mit dem Pendelkörper (3) und mit dem Träger (2) in Kontakt kommt, wobei diese relativen Positionen die Anschlagposition des Pendelkörpers (3) am Träger (2) am Ende einer Bewegung des Pendelkörpers bezüglich des Trägers aus der Ruheposition im mathematisch positiven Drehsinn und die Anschlagposition des Pendelkörpers (3) am Träger (2) am Ende einer Bewegung des Pendelkörpers bezüglich des Trägers aus der Ruheposition im mathematisch negativen Drehsinn umfassen,
wobei das Anschlagdämpfungselement (40) elastische Eigenschaften aufweist, welche die Dämpfung der Stöße ermöglichen, die mit dem Kontakt zwischen dem Träger (2) und dem Pendelkörper (3) zusammenhängen,
**dadurch gekennzeichnet dass** der Träger (2) ein Fenster (9) umfasst, das eine Kontur (10) aufweist, mit welcher die Außenkontur (41) des Querschnitts des Anschlagdämpfungselements (40) für die relativen Positionen des Pendelkörpers (3) bezüglich des Trägers (2) in Kontakt kommt.

2. Vorrichtung nach Anspruch 1, wobei das Anschlagdämpfungselement (40) mit dem Pendelkörper (3) fest verbunden ist und dauerhaft in eine Position gegenüber einer Fläche (47) des Pendelkörpers (3) gelangt, die in der besagten Ebene eine Form aufweist, die zu derjenigen der Außenkontur (41) des Querschnitts des Anschlagdämpfungselements (40) komplementär ist.

3. Vorrichtung nach einem der vorhergehenden Ansprüche, wobei das Wälzelement (11) in der besagten Ebene eine kreisförmige Außenkontur (41) aufweist, deren Durchmesser (2*R) größer als die orthoradiale Abmessung (2*R1) des Querschnitts in der Ebene des Anschlagdämpfungselements (40) ist, insbesondere als der Durchmesser des Querschnitts in der Ebene des Anschlagdämpfungselements.

4. Vorrichtung nach einem der vorhergehenden Ansprüche, wobei die Außenkontur (41) des Querschnitts des Anschlagdämpfungselements (40), der wenigstens zwei Symmetrieachsen in der besagten Ebene aufweist, kreisförmig ist,
wobei der Mittelpunkt des Kreises, der in der besagten Ebene die Außenkontur des Wälzelements (11) definiert, und der Mittelpunkt des Kreises, der in der besagten Ebene die Außenkontur (41) des Anschlagdämpfungselements (40) definiert, vorzugsweise radial ausgerichtet sind, wenn sich die Vorrichtung (1) in der Ruheposition befindet.

5. Vorrichtung nach einem der vorhergehenden Ansprüche, wobei in der Ruheposition der Vorrichtung (1) ein Teil der Kontur (41) des Querschnitts des Anschlagdämpfungselements (40) mit dem Pendelkörper (3) in Kontakt kommt und ein anderer Teil der Kontur (41) des Querschnitts des Anschlagdämpfungselements (40) mit der Kontur (10) des im Träger (2) ausgebildeten Fensters (9) in Kontakt kommt.

6. Vorrichtung nach Anspruch 5, wobei der andere Teil der Kontur (41) des Querschnitts des Anschlagdämpfungselements (40) mit einem im Wesentlichen geradlinigen Bereich (48) der Kontur (10) des im Träger (2) ausgebildeten Fensters (9) in Kontakt kommt.

7. Vorrichtung nach einem der vorhergehenden Ansprüche, wobei in der Anschlagposition des Pendelkörpers (3) am Träger (2) am Ende einer Bewegung des Pendelkörpers (3) bezüglich des Trägers (2) aus der Ruheposition im mathematisch positiven Drehsinn ein Teil der Außenkontur (41) des Querschnitts des Anschlagdämpfungselements (40) mit dem Pendelkörper (3) in Kontakt kommt und ein anderer Teil der Außenkontur (41) des Querschnitts des Anschlagdämpfungselements (40) mit der Kontur (10) des im Träger (2) ausgebildeten Fensters (9) in Kontakt kommt.

8. Vorrichtung nach einem der vorhergehenden Ansprüche, wobei in der Anschlagposition des Pendelkörpers (3) am Träger (2) am Ende einer Bewegung des Pendelkörpers (3) bezüglich des Trägers (2) aus der Ruheposition im mathematisch negativen Drehsinn ein Teil der Außenkontur (41) des Querschnitts des Anschlagdämpfungselements (40) mit dem Pendelkörper (3) in Kontakt kommt und ein anderer Teil der Außenkontur (41) des Querschnitts des Anschlagdämpfungselements (40) mit der Kontur (10) des im Träger (2) ausgebildeten Fensters (9) in Kontakt kommt.

9. Vorrichtung nach Anspruch 7 oder 8, wobei der andere Teil der Außenkontur (41) des Querschnitts des Anschlagdämpfungselements (40), der mit einem Bereich (49) der Kontur (10) des Fensters (9) in Kontakt kommt, in der besagten Ebene eine Form aufweist, die zu derjenigen der Kontur (41) des Querschnitts des Anschlagdämpfungselements (40) komplementär ist.

10. Vorrichtung nach einem der vorhergehenden Ansprüche, wobei der Pendelkörper (3) eine erste Pendelmasse (5), die axial auf einer ersten Seite (4) des Trägers (2) angeordnet ist, und eine zweite Pendelmasse (5), die axial auf einer zweiten Seite (4) des Trägers angeordnet ist, umfasst, wobei die Pendelmassen (5) durch wenigstens ein Verbindungselement (6) fest miteinander verbunden sind,
wobei das Verbindungselement (6) insbesondere eine Laufbahn (13) definiert, die mit dem Wälzelement (11) zusammenwirkt, um die Bewegung des Pendelkörpers (3) bezüglich des Trägers (2) zu führen.

11. Vorrichtung nach Anspruch 10, wobei das Anschlagdämpfungselement (40) dauerhaft in eine Position gegenüber einer radial inneren Fläche (47) des Verbindungselements (6) gelangt, wobei diese Fläche in der besagten Ebene eine Form aufweist, die zu derjenigen der Außenkontur (41) des Querschnitts des Anschlagdämpfungselements (40) komplementär ist.

12. Vorrichtung nach Anspruch 11, wobei der Pendelkörper (3) umfasst:
- zwei Verbindungselemente (6), die winkelversetzt sind und die zwei Pendelmassen (5) fest miteinander verbinden, wobei jedes Verbindungselement (6) mit einem einzigen Wälzelement (11) zusammenwirkt, und
- zwei Anschlagdämpfungselemente (40), wobei jedes Anschlagdämpfungselement (40) einem Verbindungselement (6) zugeordnet ist.

13. Vorrichtung nach einem der Ansprüche 10 bis 12, wobei sich das Verbindungselement (6) in Winkelrichtung zwischen zwei Enden erstreckt und das Anschlagdämpfungselement (40) im Wesentlichen in gleichem Abstand von jedem Winkelende des Verbindungselements (6) angeordnet ist.

## Claims

1. Device (1) for damping torsional oscillations, comprising:
- a support (2) capable of rotating about an axis (X),
- at least one pendulum assembly (3) mobile in relation to the support (2),
- at least one roller member (11) guiding the movement of the pendulum assembly (3) in relation to the support (2),
- at least one damping stop member (40), having in at least one plane orthogonal to the axis of rotation (X) of the support (2) a section having at least two axes of symmetry, this section having an outer perimeter (41) that simultaneously comes into contact with the pendulum assembly (3) and with the support (2) for relative positions of the pendulum assembly (3) in relation to the support (2), these relative positions including the stop position of the pendulum assembly (3) against the support (2) following a movement in a counter-clockwise direction of the pendulum assembly in relation to the support from the rest position and the stop position of the pendulum assembly (3) against the support (2) following a movement in a clockwise direction of the pendulum assembly in relation to the support from the rest position,
the damping stop member (40) having elastic properties enabling the damping of the impacts linked to the contact between the support (2) and the pendulum assembly (3), **characterized in that** the support (2) comprises an opening (9) having a perimeter (10) with which the outer perimeter (41) of said section of the damping stop member (40) comes into contact for relative positions of the pendulum assembly (3) in relation to the support (2).

2. Device according to Claim 1, the damping stop member (40) being rigidly connected to the pendulum assembly (3) and permanently facing a surface (47) of the pendulum assembly (3) having in said plane a complementary shape to the shape of the outer perimeter (41) of said section of the damping stop member (40).

3. Device according to one of the previous claims, the roller member (11) having in said plane a circular outer perimeter (41) the diameter (2*R) of which is greater than the orthoradial dimension (2*R1) of the section in said plane of the damping stop member (40), particularly the diameter of the section in said plane of the damping stop member.

4. Device according to any one of the previous claims, the outer perimeter (41) of the section of the damping stop member (40) having at least two axes of symmetry in said plane being circular,
the centre of the circle defining in said plane the outer perimeter of the roller member (11) and the centre of the circle defining in said plane the outer perimeter (41) of the damping stop member (40) being preferably radially aligned when the device (1) is in the rest position.

5. Device according to any one of the previous claims, one portion of the perimeter (41) of said section of the damping stop member (40) coming into contact with the pendulum assembly (3) and another portion of the perimeter (41) of said section of the damping stop member (40) coming into contact with the perimeter (10) of the opening (9) made in the support (2) in the rest position of the device (1).

6. Device according to Claim 5, the other portion of the perimeter (41) of said section of the damping stop member (40) coming into contact with a substantially straight zone (48) of the perimeter (10) of the opening (9) made in the support (2).

7. Device according to any one of the previous claims, one portion of the outer perimeter (41) of said section of the damping stop member (40) coming into contact with the pendulum assembly (3) and another portion of the outer perimeter (41) of said section of the damping stop member (40) coming into contact with the perimeter (10) of the opening (9) made in the support (2) in the stop position of the pendulum assembly (3) against the support (2) following a movement in an counter-clockwise direction of the pendulum assembly (3) in relation to the support (2) from the rest position.

8. Device according to any one of the previous claims, one portion of the outer perimeter (41) of said section of the damping stop member (40) coming into contact with the pendulum assembly (3) and another portion of the outer perimeter (41) of said section of the damping stop member (40) coming into contact with the perimeter (10) of the opening (9) made in the support (2) in the stop position of the pendulum assembly (3) against the support (2) following a movement in a clockwise direction of the pendulum assembly (3) in relation to the support (2) from the rest position.

9. Device according to Claim 7 or 8, the other portion of the outer perimeter (41) of said section of the damping stop member (40) coming into contact with a zone (49) of the perimeter (10) of the opening (9) having in said plane a complementary shape to the shape of the perimeter (41) of said section of the damping stop member (40).

10. Device according to any one of the previous claims, the pendulum assembly (3) comprising a first pendulum mass (5) arranged axially on a first side (4) of the support (2) and a second pendulum mass (5) arranged axially on a second side (4) of the support, said pendulum masses (5) being rigidly connected to each other by at least one connecting member (6),
the connecting member (6) defining in particular a raceway (13) engaging with the roller member (11) to guide the movement of the pendulum assembly (3) in relation to the support (2).

11. Device according to Claim 10, the damping stop member (40) permanently facing a radially inner surface (47) of the connecting member (6), said surface having in said plane a complementary shape to the shape of the outer perimeter (41) of said section of the damping stop member (40).

12. Device according to Claim 11, the pendulum assembly (3) comprising:
- two angularly offset connecting members (6) that rigidly connect between them the two pendulum masses (5), each connecting member (6) engaging with a single roller member (11), and
- two damping stop members (40), each damping stop member (40) being associated with a connecting member (6).

13. Device according to any one of Claims 10 to 12, the connecting member (6) extending angularly between two ends and the damping stop member (40) being arranged substantially equidistant from each angular end of the connecting member (6).
